(19)

**Europäisches Patentamt**
**European Patent Office**
**Office européen des brevets**

(11) **EP 4 015 069 A1**

(12) # EUROPEAN PATENT APPLICATION

(43) Date of publication:
**22.06.2022 Bulletin 2022/25**

(21) Application number: **20214174.3**

(22) Date of filing: **15.12.2020**

(51) International Patent Classification (IPC):
**B01D 67/00** (2006.01)   **B01D 53/22** (2006.01)
**B01D 69/14** (2006.01)   **B01D 71/02** (2006.01)
**C08F 6/20** (2006.01)

(52) Cooperative Patent Classification (CPC):
(C-Sets available)
**B01D 69/148; B01D 53/228; B01D 67/0079;**
**B01D 71/028; B01J 8/24; B01J 19/2465;**
**B01J 19/2475; C08F 6/001**                (Cont.)

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **UniSieve Ltd**
**8006 Zürich (CH)**

(72) Inventors:
• **Schneider, Elia**
 **8006 Zürich (CH)**
• **Hess, Samuel**
 **8006 Zürich (CH)**

(74) Representative: **E. Blum & Co. AG**
**Patent- und Markenanwälte VSP**
**Vorderberg 11**
**8044 Zürich (CH)**

(54)   **PROCESS FOR ECONOMICAL PRODUCTION OF POLYMERS FROM NON-POLYMER-GRADE MONOMERS**

(57)   The present invention relates to a continuous process for making polyolefines. The process involves a membrane-assisted separation of non-reacted olefins downstream a polymerisation reactor and enables economical production of polyolefines from non-polymer grade olefin monomers. The invention further provides for the use of membranes adapted to such processes. Further, the invention provides for membranes, membrane modules, and separation units adapted to such process as well as polymerisation plants comprising such membrane separation units.

EP 4 015 069 A1

(52) Cooperative Patent Classification (CPC): (Cont.)

C-Sets
**C08F 6/001, C08L 23/12**

**Description**

The present invention relates to a continuous process for making polyolefines. The process involves a membrane-assisted separation of non-reacted olefins downstream a polymerisation reactor and enables economical production of polyolefines from non-polymer grade olefin monomers. The invention further provides for the use of membranes adapted to such processes. Further, the invention provides for separation units adapted to such process as well as polymerisation plants comprising such membrane separation units.

Today, polyolefines are commercially manufactured using continuous processes starting from high-purity olefins, typically called polymer-grade olefins. One reason for using polymer-grade olefins is to minimize purge-streams and losses during manufacturing as well as accumulation of non-reactive compounds in the reactor. Further, purge gas of polymer reactors containing valuable product compounds, e.g. propylene, are often burned as conventional separation technology is not profitable. The purge is necessary to remove non-reactive compounds of the feed from the reactor, e.g. propane. Attempts have been made to use intermediate-grade olefins as a starting material and to optimize purge- and recycle- streams in the polymerisation processes.

Van Egmond et al (WO2005/082957) describes a process of making polypropylene from intermediate grade propylene. The process described requires downstream of a reactor (108) a polymer separation system (109) and a distillation unit (111) for obtaining a recycle stream comprising 30-60% propylene to be recycled.

It is apparent that both, distillation step and polymer separation system are disadvantageous, as energy-consuming.

Further, Baker et al (US6271319) describe membrane-augmented polypropylene manufacturing. The process described requires downstream of a reactor (103) a separation unit (105) to obtain a vent stream (107) and a fraction thereof, typically no more than 10%, are subjected to a membrane separation. The membranes disclosed in Baker et al only allow moderate olefin-increase compared to the feed, typically no more than about 15% or even only 5%. The membrane separation step results in a residue stream typically containing as much as 30% propane or more, which is vented from the polymerization process, and a permeate stream containing 95% or less propylene, which is recirculated to the polymerization reactor.

It is apparent that both, polymer separation (105) and insufficient membrane separation (110) are disadvantageous, as they result in large purge- streams and losses (108, 111).

In consequence, there is a need for improved manufacturing of polyolefines addressing these shortcomings.

Thus, it is an object of the present invention to mitigate at least some of these drawbacks of the state of the art. In particular, it is an aim of the present invention to provide an improved method for manufacturing polyolefines. It is a further aim to provide improved membranes, particularly membranes for adapted to these manufacturing processes.

These objectives are achieved by the method as defined in claim 1. Further aspects of the invention are disclosed in the specification and independent claims, preferred embodiments are disclosed in the specification and the dependent claims. Accordingly, the invention relates

- in a first aspect to a method for manufacturing polyolefines using a membrane separation downstream the reactor;
- in a second aspect to the use of membranes in such processes;
- in a third aspect to membrane units and polymerisation plants comprising such membrane units.

The present invention will be described in more detail below. It is understood that the various embodiments, preferences and ranges as provided / disclosed in this specification may be combined at will. Further, depending of the specific embodiment, selected definitions, embodiments or ranges may not apply.

Unless otherwise stated, the following **definitions** shall apply in this specification:

As used herein, the term "a", "an", "the" and similar terms used in the context of the present invention (especially in the context of the claims) are to be construed to cover both the singular and plural unless otherwise indicated herein or clearly contradicted by the context.

As used herein, the terms "including", "containing" and "comprising" are used herein in their open, non-limiting sense.

Membrane: The term membrane is known in the field and denotes a device that functions as a selective barrier due to the presence of pores / channels. Membranes may be present in the form of flat sheets or in the form of hollow fibers. In each case, such membrane is defined by two surfaces and channels / pores perpendicular to the membrane surfaces.

Flat sheets are typically manufactured continuously and typically have a width of 0. 25 - 1.5 m and a thickness of 10 - 200 micrometers. Hollow fibres are typically manufactured continuously and have an outer diameter of 0.1 - 5 mm and typically have a wall thickness of 10 - 500 micrometers.

In the context of this invention, the polymer pore size / channel size of the membrane may cover a broad range, typically from 20 to 3000 nm, preferably from 100 to 500 nm.

A membrane is "self-supporting", if the membrane itself is freestanding and / or can be handled manually without a supporting structure. Further, a membrane may be part of a layered structure, i.e. comprise additional layers, such as supporting layers or covering layers. Such additional layers may improve stability of the membrane, allowing reliable manufacturing and / or use at higher pressures.

MOFs (as outlined in further detail below) are embedded in these pores / channels, particularly channels vertical to the membrane plane. Without being bound to theory, it is believed that the MOFs substantially improve the membrane's selectivity. The selectivity of a membrane for the components of a given fluid may be assessed by considering Knudsen-diffusion. Assuming a simple pore / channel, diffusion is dependent on pore radius and molecular mass. The separation of compounds stemming from Knudsen diffusion can be calculated with the following formula, where alpha is the selectivity of compound A over compound B and Ma and Mb is the respective molar mass.

$$\alpha_{M_A/M_B} = \sqrt{\frac{M_B}{M_A}}$$

For example, the pair propylene / propane has a value of 1.023 and the pair ethylene / ethane has a value of 1.035. The inventive membranes show values way above the Knudsen limit, particularly a selectivity for the pair propylene / propane of at least 10 and the pair ethylene / ethane of at least 5. This finding indicates that the MOFs incorporated in the membrane significantly influence the selectivity of the membranes. On the other hand, membranes showing a selectivity in the range of the Knudsen limit apparently possess simple pores / channels that only provide moderate selectivity, i.e. a selectivity not influenced by molecular sieving. To distinguish from simple membranes, having a selectivity in the range of the Knudsen limit, the expression "tightly embedded MOFs" is chosen.

Metal-organic frameworks (MOFs) : The term MOF is known in the field and denotes chemical entity comprising metal ions (including clusters) cores and ligands (also termed "struts"). The ligands have at least two coordination sites. In the context of this invention MOFs do form a 3 dimensional network with open pores.

Percentages given in this specification, unless otherwise indicated, relate to mass - %.

The present invention will be better understood by reference to the **figures.**

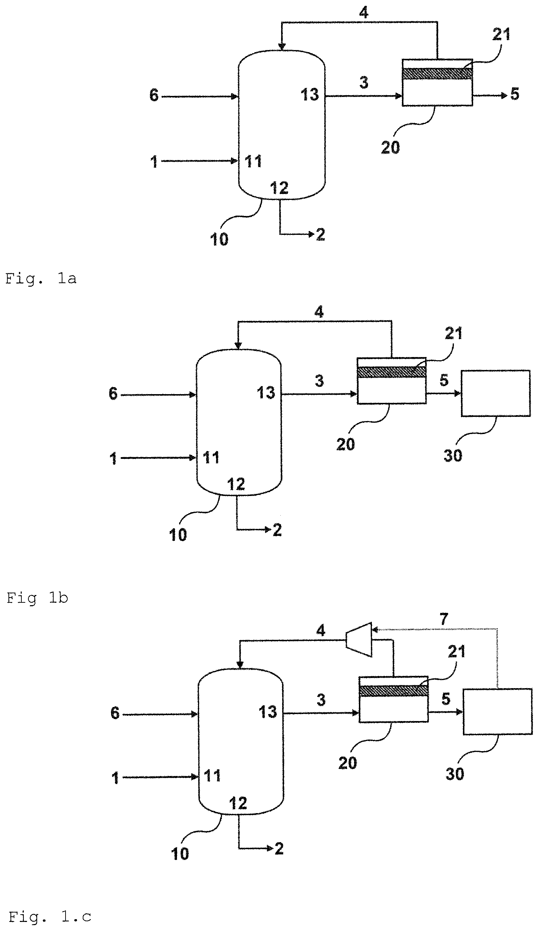

Figure 1 outlines the polyolefine manufacturing process described herein. List of references:

(10) polymerisation reactor with inlet (11), polyolefine outlet (12) and first effluent outlet (13)
(20) membrane separation unit with membrane module(s) (21) comprising membrane(s) (22) (the individual membrane not shown)
(30) gas turbine or heating unit
(1) olefin stream
(2) polyolefine product
(3) first effluent stream
(4) olefin-enriched recycle stream, permeate
(5) second effluent stream, depleted in olefin, residue
(6) polyolefine forming catalyst
(7) energy generated by a gas turbine (30)

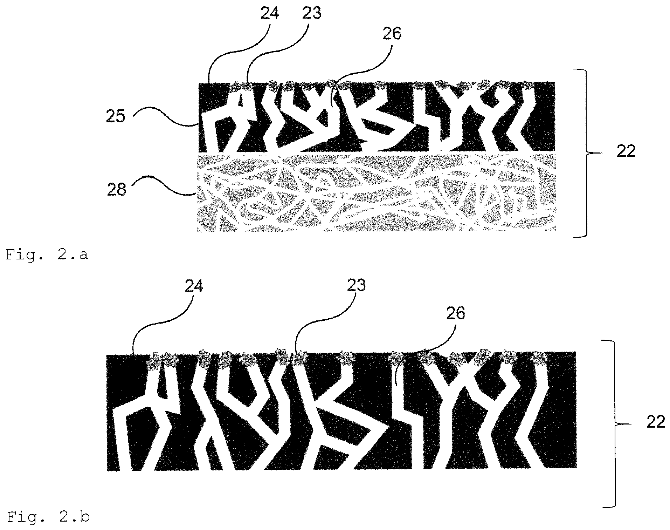

Figure 2 outlies the structure of suitable membranes (22), Fig. 2a shows an embodiment with backing layer while Fig. 2b shows an embodiment without backing layer. An optional 2nd functional layer (27) opposite to the backing layer(28) may be present (not shown). List of references:

(25) 1st functional layer comprising a polymer matrix (24) with channels (26) perpendicular to the membrane surface and molecular sieves (23) tightly embedded in said channels (26) ;
(28) backing layer connected to said 1st functional layer (25), a crucial feature to ensure pressure and tear resistance.

In more general terms, in **a first aspect,** the invention relates to a continuous process for making polyolefines (2), comprising the steps of (a) feeding an olefin stream (1) to a reactor (10); (b) contacting the olefin stream (1) with a polyolefine forming catalyst (6) in the reactor (10) to thereby obtain polyolefines (2) and a first effluent stream (3); (c) removing the polyolefines (2) and the first effluent stream (3) from the reactor (10) at separate outlets (12, 13); (d) directly subjecting the first effluent stream (3) to a membrane separation unit (20) to thereby obtain an olefin-enriched recycle stream (4) and a second effluent stream depleted in olefin (5); (e) feeding the reactor (10) with the recycle stream (4). According to this invention, the membrane separation unit (20) comprises membranes (22), said membranes comprising a polymer matrix (24) and molecular sieves (23) and said membrane (22) comprising channels (26) perpendicular to the membrane surface thereby connecting both surfaces of said membrane and wherein said molecular sieves (23) are located within said channels (26).

As explained in further detail below, the inventive process allows using an intermediate grade monomer stream as feed for a polymerisation reactor (10). The non-reacted byproducts (3) are fed to a membrane unit (20) where saturated, non-reactive compounds (5) are removed while non-converted olefins (4) are recycled. Thus, the process allows using intermediate grade monomer as a starting material and ensures a constant monomer concentration in the reactor (10). The inventive process thus allows economical production of polymers from both, polymer-grade monomers and non-polymer-grade monomers.

Without being bound to theory, it is believed that the membranes (22) described herein play an important role in successfully performing the continuous process described herein. Particularly, the combination of polymer matrix (24), channels (26) and molecular sieves (23) are important. The molecular sieves (23) remain within said channels (26) when used, ie. during manufacturing of membrane modules and when in use. To distinguish from simple (and removable) coatings of molecular sieves on membrane surfaces, the expression "tightly embedded" is used.

This aspect of the invention shall be explained in further details below.

**Membrane unit (20):** Membrane units are known per se; a membrane unit (20) comprises one or more membrane modules (21). Each membrane module, in turn, comprises one or more membranes (22). Until now, membranes (22) as defined herein were not applied in membrane units (20) for the purpose of olefin/paraffin separation, located downstream a polymerisation reactor (10). Membrane units (20) are adapted to elevated temperatures, e.g. 30 - 100°C and elevated pressures, e.g. 10 - 50 bar.

Typically, membranes (22) are housed in a membrane module (21) as known in the field, including Spiral-wound modules, plate-frame modules and potted hollow-fiber modules. Flat-sheet membranes in spiral-wound modules are preferred. The making of all these types of modules is well known in the art.

The membranes (22) may be present in the form of flat sheets or in the form of fibers. Since conventional polymeric materials are used for the membranes, they are relatively easy and inexpensive to prepare and to house in modules, particularly compared with other types of membranes, such as pyrolysed carbon membranes and ceramic membranes. The making of all these types of modules is well known in the art.

According to this invention, membrane (22) comprises a first functional layer (25), optionally a backing layer (28) connected to the first functional layer. The membrane (22) may further comprise a $2^{nd}$ functional layer (27) opposite to said backing layer (28).

The first functional layer (25) comprises a polymer matrix (24) and molecular sieves (23) and said matrix (24) comprising channels perpendicular to the membrane surface thereby connecting both surfaces of said membrane and wherein said molecular sieves (23) are located within said channels. Due to the location of molecular sieves (23) within said channels, the molecular sieves are tightly embedded and the membranes show a selectivity for a given olefin/paraffin pair above the Knudsen limit.

A suitable polymer matrix (24) may be selected from a broad range of polymers, including celluloseacetate (CA), polyethersulfone (PES), polyvinylidenfluoride (PVDF), polysulfone (PSf), polyacrylonitrile (PAN), polyimide (PI), polyamide-imide (PAI, e.g., TORLON), polyetheretherketones (PEEK) and polylactic acid (PLA), polycarbonates (PC), polystyrenes (PS), polyacrylates, and polyurethanes (PU); preferably PES.

The Molecular sieve (23) may be selected from a broad range of known molecular sieves, including molecular frameworks, such as ZIF-7, ZIF-8, ZIF-20, ZIF-21, ZIF-22, ZIF-23, ZIF-69, ZIF-90, SIM-1, MIL-47, MIL-53, MOF-5, MIL-96, MIL-89, MIL-101, and HKUST-1 and combinations thereof; preferably ZIF-8, ZIF-90 and ZIF-7 and combinations thereof.

The backing layer (28) may comprise or consist of a polyamide membrane.

The second functional layer (27) may comprise or consist of MOFs as defined herein.

Advantageously, the membrane (22) comprises or consists of a first functional layer (25) and a backing layer (28).

**Reactor (10):** Reactors conventional in the field may be used for the present method. Advantageously, fluidized bed reactors are used. Suitable reactors are adapted to convert the olefin into the corresponding polyolefine in the presence of catalyst. The reactor (10) is adapted to receive feed stream (1) and recycle stream (4) via one or more inlets (11). The reactor is further adapted to release formed polyolefin (2) via one or more outlets (12) and first effluent stream (3) via one or more outlets (13).

**Step (a):** Feeding a polymerisation reactor with the starting material is known. Depending on the reactor, the starting material may already contain catalyst. Alternatively, catalyst may be separately fed to the reactor and feed stream (1) is free of catalyst.

Further, recycle stream (4) and Feed stream (1) may be combined prior to feeding the reactor in one inlet; or these streams may be fed via separate inlets into the reactor.

Olefines are classified by its purity including, refinery grade, chemical grade and polymer grade. For propylene, the respective value for refinery grade (RGP) is ~60-70%, for chemical grade (CGP) is ~92-96% and for polymer grade (PGP) is >99.5%. Replacing Polymer grade olefins by Chemical grade olefins is apparently beneficial for economic reasons. However, it also has a significant ecological impact, as energy - intense purification is avoided. In one embodiment, the olefin stream (1) is an intermediate grade olefin stream (e.g. RGP or CGP stream). Depending on the specific process applied, such olefin stream may be pre-treated to thereby remove components that can be critical to the catalyst. Such pre-treatment particularly reduces the concentration of sulfur, alkyne or oxygen containing compounds to acceptable levels.

In one embodiment, the olefin stream (1) is a ethylene stream and the polyolefine (2) is polyethylene. Such ethylene may be free of other olefins, thereby resulting in HD-PE or may contain alpha-olefines, thereby resulting in LLDPE.

In one embodiment, the olefin stream (1) is a propylene stream and the polyolefine (2) is a polypropylene.

In one embodiment, the olefin stream (1) is a butylene stream and the polyolefine (2) is a polyisobutylene.

**Step (b):** Catalytic polymerisation of olefins to obtain polyolefines is a known process. Typically, the catalyst is present in the form of solid particles. The reaction may take place in a slurry or gas phase; at present gas phase polymerisation is preferred. Suitable reaction conditions for polypropylene are 50 - 80°C / 20-40 bar; for polyethylene 50-100 °C / 5-80 bar and for polyisobutene 40-80°C, 2-20 bar.

A number of reactor types and reaction conditions are known to the skilled person. It is an advantage of the present invention that reactors and plants currently in use may be adapted to implement the continuous process described herein. An upgrade of existing reactors / plants thereby improves both, the economics and the ecological balance sheet of existing reactors / plants.

As discussed in the prior art cited above, the whole reaction mixture is removed from the reactor and subjected to an individual separation step. According to this invention, such individual separation can be avoided. Rather, the polyolefine (2) formed in this step (b) is removed via outlet (12), while a first effluent stream (3) is removed via outlet (13) from the reactor (10).

**Step (c):** In line with the inventive method, the polyolefine is separately removed via outlet (12) while the first effluent stream (3) is removed via outlet (13). Reactors adapted to such process step are known in the art. The layout avoids an additional separation unit, as required in the prior art discussed above.

In an embodiment, outlet (13) contains a means for removing / passivating catalyst (6). Such catalyst may be present in effluent stream (3) and may result in a negative influence on the performance of membrane unit (21).

**Step (d):** Separation step (d) is of key relevance for the inventive method. Due to the beneficial properties of the membranes described herein, it is possible to perform the synthesis using chemical grade olefins and / or to essentially avoid, or avoid, purge streams. In view of the membranes used, recycle stream (4) is the permeate while second effluent stream (5) is the residue.

It is considered advantageous that step (d) uses process parameters similar to reaction conditions (c), i.e. Temperatures +/- 20°C compared to the reactor and pressure +/- 10 bar compared to the reactor (10).

In one embodiment, the second effluent stream (5) comprises at most 25 %, preferably at most 5% olefin.

In one embodiment, the recycle stream (4) comprises at least 90%, preferably at least 95% olefin.

Separation step (c) follows directly past removal of effluent stream (3) from the reactor. Thus, between reactor (10) and membrane unit (20), no separation unit is required. This distinguishes from the above cited prior art where always a separation unit is required past the reactor. Apparently, avoiding such additional separation unit is a benefit to the process.

The first effluent stream of step (c) may be subjected to the step (d) in total, i.e. without a split. Alternatively, effluent stream (3) may be split into a stream subject to step (d) (stream 3') and a stream directly recycled to the reactor (stream 4'). Allowing such split improves process control and flexibility. Typically, more than 50%, preferably more than 90%, much preferably more than 95% of the first effluent stream are subjected to step (d). Thus, only a small fraction, if any, is directly recycled. Compared to the prior art, the highly effective membranes allow subjecting a large fraction to the separation unit (20).

In an exemplary embodiment, the first effluent (3) contains 80 - 90% olefin and the recycle stream (4) contains 95 - 99% olefine.

In an exemplary embodiment, the olefin stream (1) is polymer grade propylene, the membrane (24) is a PES membrane and the molecular sieve (23) is ZIF-8.

In a further exemplary embodiment, the olefin stream (1) is chemical grade propylene, the membrane (24) is a PES membrane, and the molecular sieve (23) is ZIF-8.

In a further exemplary embodiment, the olefin stream (1) is polymer grade propylene, the membrane (24) is a PES membrane, and the molecular sieve (23) is ZIF-8 in combination with further ZIFs, either as a mixture in one functional layer or separated in two functional layers.

In a further exemplary embodiment, the olefin stream (1) is chemical grade propylene, the membrane (24) is a PES membrane and the molecular sieve (23) is ZIF-8 in combination with further ZIFs, either as a mixture in one functional layer or separated in two functional layers.

In a further exemplary embodiment, the olefin stream (1) is polymer grade ethylene, the membrane (24) is a PES membrane and the molecular sieve (23) is ZIF-8.

In a further exemplary embodiment, the olefin stream (1) is chemical grade ethylene, the membrane (24) is a PES membrane and the molecular sieve (23) is ZIF-8.

**Further Steps:** It is apparent that the inventive polymer manufacturing process may be embedded in a larger process and / or may be complemented by further process steps. Such steps are known in the field and include the steps described below

**Step (f)** In one embodiment, the second effluent stream (5) may be fed to a heating unit. As stream (5) is depleted in olefins and rich in alkanes, it may be used to generate heat, e.g. for heating reactor (10). In one further embodiment, the second effluent stream (5) may be fed to a gas turbine to thereby generating electrical energy (7). This energy may be used for a compressor to pressurize stream (4) before feeding it to reactor (10) .

In a **second aspect,** the invention relates to the use of specific membranes (22), membrane modules (21) and membrane units (20), all as described herein, in a continuous olefin polymerisation processes, particularly in a catalytic olefin polymerisation process as described herein.

In a **third aspect,** the invention relates to novel membranes, membrane modules, membrane units and polymerisation plants comprising them.

In one embodiment, the invention provides for a membrane (22), comprising (i) a backing layer (28); (iii) a functional layer (25) comprising a polymer matrix (24) and molecular sieves (23), said functional layer (25) comprising channels (26) within said matrix (24) perpendicular to the membrane surface thereby connecting both surfaces of said membrane and wherein said molecular sieves (23) are located within said channels (26), said molecular sieves (23) are as defined herein and said polymer matrix (24) is as defined in herein. Advantageously, the molecular sieves are selected from the group consisting of ZIF-8, ZIF-90, ZIF-7 and combinations thereof. Advantageously, said polymer matrix (24) contains, ie. comprises or consists of, polysulfones, e.g. PES. Advantageously, said polymer matrix (24) also contains, ie. comprises or consists of, solid zinc particles e.g. ZnO or Zn(NO3)2.

In one embodiment, the invention provides for a membrane as described above, further comprising (iv) a second functional layer containing (27), ie. comprising or consisting of, molecular sieves (23) as described herein (preferably ZIF-8, ZIF-90, ZIF-7 and combinations thereof). By including such second functional layer (27), performance of the membrane may be fine-tuned. In an embodiment, the molecular sieves (23) of first and second functional layer differ.

In one embodiment, the invention provides for a membrane module (21), comprising one or more membranes as described herein. Advantageously, the membrane modules are adapted to gas separation processes as described herein. Such modules are known per se, but not containing the membranes as described herein. It is considered an advantage that present membrane modules may be replaced by the inventive membrane modules, thereby improving polyolefine production. Inventive membrane modules may be selected from the group of "flat sheet" membrane modules and "hollow fibre" membrane modules. Such membrane modules may comprise one or more membranes (22) as described herein.

In one embodiment the membrane module is a flat sheet membrane module, selected from spiral wound membrane modules, plate frame modules, and tubular modules, particularly tubular modules.

In one further embodiment, the membrane module is selected from hollow fibre membrane modules.

In one embodiment, the invention provides a membrane separation unit (20) comprising one or more modules as defined herein.

In one embodiment, the invention provides for a membrane separation unit (20) adapted to the process of claim 1, said separation unit comprises a membrane (22), said membrane comprising a polymer matrix (24) with channel - like structures and molecular sieves (23) embedded therein.

In one embodiment, the invention provides for a polypropylene-production plant comprising a reactor (10) and a membrane unit (20), the reactor (10) being a fluidized bed reactor adapted to convert chemical grade propylene feed, the membrane unit (20) comprising one or more membranes (22) as defined herein or membrane units (21) as defined herein, the membrane unit (20) being in direct fluid communication with the reactor to receive a stream free of polypropylene.

In one embodiment, the invention provides for a polyethylene-production plant comprising a reactor (10) and a membrane unit (20), the reactor (10) being a fluidized bed reactor adapted to convert as chemical grade ethylene feed, the membrane unit (20) comprising one or more membranes (22) as defined herein or membrane units (21) as defined herein, the membrane unit (20) being in direct fluid communication with the reactor to receive a stream free of polyethylene.

To further illustrate the invention, the following **examples** are provided. These examples are provided with no intend to limit the scope of the invention.

**Example I Manufacturing and Characterization of membrane**

The membrane is prepared in 5 steps (a-e), as described below:

Step (a), provision of dispersion: 10 wt% Polyethersulfone was dissolved in dimethylacetamide and mixed with ZnO-nanoparticles (Zincox 19, Ibutec) and glycerol (Sigma-Aldrich, >99.5%). The particles were dispersed using a ultrasonication processor.

Step (b), coating: A spiral film applicator (Zehnter, ZAA2300, 180 um wire bar, 0.1 m/min) was used to produce the ZnO containing films in (150 cm$^2$) size.

Step (c), phase inversion: In this step, pores are formed in the polymer matrix by a phase-inversion process. This is done by drying the coated film at temperatures of 110°C in an oven for 10 minutes.

Step (d), ZIF Functionalization: the ZnO containing sheet (150 cm$^2$) is incubated in 400 ml of solution 1 (1 wt% imidazole-linker) for 1 h at 50°C and then washed for 1 h in 400 ml of methanol and dried subsequently.

Step (e), support with backing layer: a sheet (150 cm$^2$) of porous support layer (Parafil RT 30 g/m2) is prepared by applying spray glue to it (Uhu Spray Adhesive) and the functionalized membrane is then pressed onto the backing layer for 5 h with a force of 0.1 N/cm$^2$ and dried subsequently.

Characterization: the main important membrane characterization parameters ideal selectivity (preferred transportation of one gas over another through the membrane) and permeance (pressure and area corrected molar flow through the membrane in GPU, 1 GPU = 10$^{-6}$ cm$^3$ (STP) cm$^{-2}$ s$^{-1}$ cmHg$^{-1}$), where measured in samples of 2 cm2 in a pressure cell. Propylene and propane at 1 bar(g) was applied.

|        | Permeance (GPU) |        | Ideal Selectivity |
|--------|--------|--------|-------------------|
| Sample | C3H6 | C3H8 | C3H6/C3H8 |
| 1 | 18.5 | 1.0 | 18.5 |
| 2 | 24.0 | 1.0 | 23.9 |
| 3 | 24.1 | 1.7 | 14.0 |
| Average | 22.2 ± 2.6 | 1.2 ± 0.3 | 18.7 ± 4.1 |

**Example II Implementation in Polymerisation process**

A computational simulation was performed to illustrate the recovery of monomer losses that occur in a state-of-the-art polypropylene process. In example II.a, polymer-grade propylene is used while in example II.b, chemical-grade propylene is used.

**Example II.a**

The **base case** describes the process of Figure 1.a, without the membrane separation unit (20). A total feed (1) of 10.7 t/h is assumed, an average feed amount for this process, taken from Baker (US6271319). The olefin losses occur because the corresponding unreactive paraffin has to be removed from the system constantly in order to avoid propane build-up. With the paraffin vapour, a portion of the olefin, typically 70-90 % of the total effluent stream, is lost or has to be recycled by other means. The high olefin amount is derived from the olefin concentration in the polymerization reactor (10), where a certain olefin concentration has to be reached to ensure optimal reaction rate. The effluent stream (3) value is composed of the paraffin in the total feed (1), which corresponds to 30% of the stream, while the remaining 70% are the olefin, mirroring a reactor concentration of 70% monomer. The goal of the system is to remove the paraffin, e.g. propane, that is entering the system with the feed.

The **inventive case** describes the process of Figure 1.a with the membrane separation unit (20) while the base case considers direct recycling without the means of such separation unit (not shown in the figures). The membrane parameters used for the simulations where a propylene over propane selectivity of 18.7 and a propylene permeance of 22.2 GPU, as described example 1.

| Example with PGP feed (propylene content **99.5 wt%**) | | |
|---|---|---|
| | Base case without membrane (comparative) | Case with membrane unit (inventive) |
| Effluent stream 3 (kg/h) | 178 | 250 |
| Propane content (wt %) | 30 | 30 |
| Propane amount (kg/h) | 54 | 75 |
| Propylene content (wt %) | 70 | 70 |

(continued)

| Example with PGP feed (propylene content **99.5 wt%**) | | |
|---|---|---|
| | Base case without membrane (comparative) | Case with membrane unit (inventive) |
| Propylene amount (kg/h) | 125 | 175 |
| Second effluent stream 5 (kg/h) | 178 | 59 |
| Propane content (wt %) | 30 | 92 |
| Propane amount (kg/h) | **54** | **54** |
| Propylene content (wt %) | 70 | 8 |
| Propylene amount (kg/h) | **125** | **5** |

In Example II.a it is apparent that with the membrane unit the same amount of propane is removed from the system compared to the base case (54 kg/h each). At the same time, the loss of propylene is more than 30 times less (125 kg/h vs 5 kg/h).

**Example II.b**

The same applies for example II.b. Here, the feed is chemical grade propylene with a propylene purity of 93 wt%. Again, a base case without membrane separation unit (20) is compared with an inventive case comprising membrane separation unit (20), applying the parameters described above in example II.a.

| Example with CGP feed (propylene content **93.0 wt%**) | | |
|---|---|---|
| | Base case without membrane (comparative) | Case with membrane unit (inventive) |
| Effluent stream 3 (kg/h) | 2499 | 3850 |
| Propane content (wt %) | 30 | 30 |
| Propane amount (kg/h) | 750 | 1155 |
| Propylene content (wt %) | 70 | 70 |
| Propylene amount (kg/h) | 1749 | 2695 |
| Second effluent stream 5 (kg/h) | 2499 | 765 |
| Propane content (wt %) | 30 | 98 |
| Propane amount (kg/h) | **750** | **750** |
| Propylene content (wt %) | 70 | 2 |
| Propylene amount (kg/h) | **1749** | **15** |

In Example II.b it is apparent that also by using CGP feed with the membrane unit the same amount of propane is removed from the system compared to the base case (750 kg/h each). At the same time, the loss of propylene is more than 100 times less (1749 kg/h vs 15 kg/h). As can be seen, CGP feed is likewise suitable for the polymerisation reaction.

**Claims**

1. A continuous process for making polyolefines (2), comprising the steps of

    a. feeding an olefin stream (1) to a reactor (10);
    b. contacting the olefin stream (1) with a polyolefine forming catalyst (6) in the reactor (10) to thereby obtain polyolefines (2) and a first effluent stream (3) ;
    c. removing the polyolefines (2) and the first effluent stream (3) from the reactor (10) at separate outlets (12, 13);
    d. directly subjecting the first effluent stream (3) to a membrane separation unit (20) to thereby obtain an olefin-enriched recycle stream (4) and a second effluent stream depleted in olefin (5);
    e. feeding the reactor (10) with the recycle stream (4); and
    f. optionally feeding a gas turbine or heating unit (30) with the second effluent stream (5);

**characterized in that** the membrane separation unit (20) comprises a membrane (22),

- said membrane (22) comprising a polymer matrix (24) and molecular sieves (23) and
- said membrane (22) comprising channels (26) within said matrix (24) perpendicular to the membrane surface thereby connecting both surfaces of said membrane and
- said molecular sieves (23) are tightly embedded within said channels (26).

2.  The process of claim 1, where the olefin stream (1) is an intermediate grade olefin stream.

3.  The process of claim 1 or 2, where

- the olefin stream (1) is a polyethylene stream and the polyolefine (2) is polyethylene; or
- the olefin stream (1) is a polypropylene stream and the polyolefine (2) is a polypropylene; or
- the olefin stream (1) is a polybutylene stream and the polyolefine (2) is a polyisobutylene.

4.  The process according to any of claims 1 to 3, where in step d

- the second effluent stream (5) comprises at most 25 %, preferably at most 5% olefin; and / or
- the recycle stream (4) comprises at least 90%, preferably at least 95% olefin.

5.  The process of claim 1, where said membrane (22) comprises

- a backing layer (28)
- a first functional layer (25), said functional layer (25) comprising said polymer matrix (24) and said molecular sieves (23) located in said channels (26); and
- optionally a second functional layer comprising or consisting of molecular sieves (23).

6.  The process of claim 1, where said polymer matrix (24) is selected from PES.

7.  The process of claim 1, where said molecular sieves (23) are selected from ZIF-8, ZIF-90, ZIF-7 and mixtures thereof.

8.  A membrane (22), comprising

- a backing layer (28),
- a functional layer (25) comprising a polymer matrix (24) and molecular sieves (23), said functional layer (25) comprising channels (26) within said matrix (24) perpendicular to the membrane surface thereby connecting both surfaces of said membrane and wherein said molecular sieves (23) are located within said channels (26), said molecular sieves (23) are as defined in claim 7 and said polymer matrix (24) is as defined in claim 6;
- optionally a second functional layer containing molecular sieves (23) as defined in claim 7.

9.  A membrane module (21), wherein said module is selected from spiral wound membrane modules, plate frame modules, and cylinder modules, in each case comprising one or more membranes (22) as defined in claim 8.

10.  A membrane separation unit (20) comprising one or more modules as defined in claim 9.

11.  A membrane separation unit (20) adapted to the process of claim 1, said separation unit comprises a membrane (22), said membrane comprising a polymer matrix (24) with channel - like structures and molecular sieves (23) embedded therein.

12.  A polypropylene-production plant comprising a reactor (10) and a membrane unit (20),

- the reactor (10) being a fluidized bed reactor adapted to convert chemical grade propylene feed,
- the membrane unit (20) comprising one or more membranes (22) as defined in claim 8 or membrane moudles (21) as defined in claim 9,
- the membrane unit (20) being in fluid communication with the reactor (10) to receive a stream free of polypropylene.

13.  A polyethylene-production plant comprising a reactor (10) and a membrane unit (20),

- the reactor (10) being a fluidized bed reactor adapted to convert as chemical grade ethylene feed,
- the membrane unit (20) comprising one or more membranes (22) as defined in claim 8 or membrane modules (21) as defined in claim 9,
- the membrane unit (20) being in fluid communication with the reactor (10) to receive a stream free of polyethylene.

Fig. 1a

Fig 1b

Fig. 1.c

Fig. 2.a

Fig. 2.b

Europäisches
Patentamt

European
Patent Office

Office européen
des brevets

## EUROPEAN SEARCH REPORT

Application Number

EP 20 21 4174

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/306698 A1 (STARK WENDELIN JAN [CH] ET AL) 1 October 2020 (2020-10-01) | 8-11 | INV. B01D67/00 |
| Y | * paragraphs [0098], [0112] - [0114], [0121]; claims; figure 1 * | 1-7,12, 13 | B01D53/22 B01D69/14 B01D71/02 |
| Y,D | US 6 271 319 B1 (BAKER RICHARD W [US] ET AL) 7 August 2001 (2001-08-07) * column 5, lines 31-35; claim 1; figure 1 * | 1-7,12 | C08F6/20 |
| | * column 6, line 66 - column 7, line 9 * | | |
| Y,D | WO 2005/082957 A1 (EXXONMOBIL CHEMICAL PATENT INC [US]; VAN EGMOND COR F [US] ET AL.) 9 September 2005 (2005-09-09) * paragraphs [0087] - [0092]; claims * | 1-7,12 | |
| Y | US 4 623 704 A (DEMBICKI DENNIS R [CA] ET AL) 18 November 1986 (1986-11-18) * column 2, lines 5-7; claims 1, 3; figure 1 * | 1-7,13 | |

TECHNICAL FIELDS
SEARCHED      (IPC)

B01D
C08F
C08J
C08L

The present search report has been drawn up for all claims

| Place of search | Date of completion of the search | Examiner |
|---|---|---|
| Munich | 26 May 2021 | Veríssimo, Sónia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 20 21 4174

This annex lists the patent family members relating to the patent documents cited in the above-mentioned European search report.
The members are as contained in the European Patent Office EDP file on
The European Patent Office is in no way liable for these particulars which are merely given for the purpose of information.

26-05-2021

| Patent document cited in search report | | Publication date | Patent family member(s) | | Publication date |
|---|---|---|---|---|---|
| US 2020306698 | A1 | 01-10-2020 | CN | 109195700 A | 11-01-2019 |
| | | | EP | 3251742 A1 | 06-12-2017 |
| | | | EP | 3445485 A1 | 27-02-2019 |
| | | | JP | 2019523701 A | 29-08-2019 |
| | | | US | 2020306698 A1 | 01-10-2020 |
| | | | WO | 2017207424 A1 | 07-12-2017 |
| US 6271319 | B1 | 07-08-2001 | NONE | | |
| WO 2005082957 | A1 | 09-09-2005 | AT | 376006 T | 15-11-2007 |
| | | | CN | 1922218 A | 28-02-2007 |
| | | | EA | 200601530 A1 | 27-02-2007 |
| | | | EP | 1723183 A1 | 22-11-2006 |
| | | | US | 2005187358 A1 | 25-08-2005 |
| | | | WO | 2005082957 A1 | 09-09-2005 |
| US 4623704 | A | 18-11-1986 | CA | 1296483 C | 25-02-1992 |
| | | | US | 4623704 A | 18-11-1986 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005082957 A, Van Egmond

- US 6271319 B, Further, Baker